# EUROPEAN PATENT SPECIFICATION

(11) **EP 2 746 148 B1**
(45) Date of publication and mention of the grant of the patent: **17.06.2015**
(21) Application number: 13197081.6
(22) Date of filing: 13.12.2013
(51) Int. Cl.: B63J 2/14, F02G 5/00

(54) **Inland waterway tanker for transportation of liquid product**
Binnenschifftanker zum Transport eines flüssigen Produkts
Pétrolier de voie navigable fluviale destinée au transport de produits liquides

(30) Priority: 21.12.2012 NL 2010041
(43) Date of publication of application: 25.06.2014
(73) Proprietor: Ship Innovation B.V., 4251 GE Werkendam (NL)
(72) Inventor: Van de Berg, Dennis, 3068 HH ROTTERDAM (NL); Ruijtenberg, Jan Hendrik, 4251 GE WERKENDAM (NL)
(74) Representative: EP&C

(56) References cited:
- EP-A1- 0 023 229
- WO-A1-97/07018
- GB-A- 1 211 766
- US-B1- 6 899 580

## Description

The present invention relates to an inland waterway tanker for transportation of liquid product over inland waterways. The tanker has a cargo tank heating system for heating liquid product within said one or more cargo tanks, e.g. crude oil.

Inland waterway tankers are known with a cargo tank heating system for heating liquid product within the cargo tanks of the tanker. Heating the cargo is e.g. commonly done to keep the liquid product sufficiently fluidic in order to allow for efficient pumping the product out of the cargo tanks when the port of destination has been reached.

It is common practice, e.g. when transporting crude oil, to keep the cargo above 30 °C, for example between 30 °C and 60 °C during the trip between the ports, e.g. between a port in the Netherlands and a port in Germany or Belgium, e.g. along the river Rhine. It is also known to further raise the temperature of the liquid product cargo just ahead of the actual pumping at the port of destination to a higher temperature, e.g. shortly before reaching said port and/or while waiting in the port to be unloaded.

Many inland waterway tankers are nowadays double hull tankers, so that some thermal insulation of the cargo tanks is obtained compared to single hull tankers wherein the steel outer hull also delimits the cargo tanks. Nonetheless the elevated transport temperature of the liquid product in the cargo tanks necessitates the presence of a cargo tank heating system.

In a known embodiment the cargo tanker heating system comprises a closed thermal oil circuit that is filled with thermal oil. The thermal oil circuit comprises a pump and heat exchanger ducts extending along and/or within the cargo tanks to heat the liquid product therein. To heat the thermal oil in the circuit to a temperature well above 100 °C it is known to provide a heating device with a fuel powered burner, commonly on diesel fuel (gasoil) or LNG (liquefied natural gas) or another combustible fuel. Practical temperatures of thermal oil leaving the heating device towards the heat exchanger ducts may be around 200 °C.

Document EP 0023 229 constitutes the closest prior art.

These known simple cargo heating systems consume an undesirable amount of fuel for the fuel powered burner, which causes expenses for a 3500 tonnes cargo capacity inland waterway tanker that may be around 10.000 euro per month at 2012 price levels.

In order to reduce the costs of heating the cargo, and for environmental reasons, an alternative tanker cargo heating system is employed on inland waterway tankers. In this system energy is recovered from the hot exhaust gas that emerges from the tanker propulsion engine installation, in particular from the exhaust gas of the combustible fuel powered propulsion engine of the tanker.

In a known embodiment of such a cargo heating system with exhaust gas heat recovery, the return flow of thermal heating oil from the heat exchanger ducts that extend along and/or within the cargo tanks is first passed through an exhaust gas heat recovery device, and then passed through the heating device with fuel powered burner. The recovery device is fed with hot exhaust gas from the engine, practically at temperatures above 300 °C, e.g. about 350 °C. The return flow of thermal oil is circulated through a coiled channel that is exposed to the hot exhaust gas, and so the thermal oil is preheated before it reaches the fuel powered burner heating device and is then further heated to its regular temperature, e.g. of about 200 °C. This heat recovery from the exhaust gas of the propulsion engine leads to a reduction of the fuel consumption of the cargo heating system.

The present invention aims to provide an alternative inland waterways tanker with cargo heating system to keep the liquid product cargo heated during the trip. In particular a system is envisaged that can be energy efficient, cost effective, and relatively simple to implement, notably in existing inland waterway tankers.

The invention provides an inland waterway tanker for transportation of liquid product over inland waterways, e.g. crude oil, according to claim 1.

The tanker has a hull with an outer hull shell and one or more liquid product cargo tanks arranged within the hull. These tanks are spaced from the outer hull shell to provide a double hull configuration.

The tanker has a tanker propulsion engine installation with a combustible fuel powered propulsion engine, e.g. fed with gasoil and/or LNG (liquefied natural gas).

In a preferred embodiment the inland waterway tanker has a closed cooling water circuit that is filled with cooling water for cooling said engine. The invention may, however, also be used in a situation wherein outboard water is pumped through the cooling water circuit and then discharged again.

In a preferred embodiment the closed cooling water circuit comprises a cooling water circulation pump and a first heat exchanger that is adapted to exchange heat between the cooling water and outboard water. More preferably, and fairly common, this first heat exchanger is arranged in a below waterline recessed compartment adjacent the outer hull shell, which compartment has one or more openings allowing outboard water to flow into and out of the compartment along the first heat exchanger. In Dutch shipping terminology this is known as "beunkoeling".

An exhaust system is present for the discharge of exhaust gas from the engine.

The cargo tank heating system for heating the liquid product within the one or more cargo tanks comprises a closed thermal oil circuit filled with thermal oil. This circuit comprises heat exchanger ducts extending along and/or within the one or more cargo tanks to heat the liquid product therein. A high-temperature thermal oil heating device is present which has a capacity to heat the thermal oil in the circuit to a temperature above 100 °C, e.g. between 200 °C and 350 °C, while the cargo tanks are filled with liquid product.

The inventive tanker is characterized in that the cargo tank heating system comprises a thermal oil circuit heat exchanger, so distinct from the mentioned first heat exchanger of the cooling water circuit when present. This thermal oil circuit heat exchanger has a cooling water flow path forming part of the cooling water circuit and has a thermal oil flow path forming part of the closed thermal oil circuit and being separated from said cooling water flow path. The thermal oil circuit heat exchanger is adapted to exchange heat between the cooling water from the engine and the thermal oil in order to allow for heating of the liquid product in the one or more cargo tanks by heat recovered from the cooling water.

Preferably the recovery of heat from the cooling water of the engine is performed in a low-temperature circulation mode of the cargo heating device, wherein the thermal oil temperature is below the cooling water temperature of cooling water emerging from the propulsion engine.

The cooling water flow path of the thermal oil circuit heat exchanger is located between the propulsion engine and the first heat exchanger when present in the water cooling circuit. The water cooling circuit comprises a bypass duct that is adapted to allow for bypassing the cooling water about the cooling water flow path in the thermal oil circuit heat exchanger, and the heating system comprises one or more valves allowing to selectively open or close the cooling water flow path and the bypass duct to selectively pass the cooling water through the thermal oil circuit heat exchanger or to bypass the thermal oil circuit heat exchanger.

The inventive inland waterway tanker is based on the insight that the thermal oil circuit can effectively be operated in a low-temperature circulation mode of the cargo heating device, wherein the thermal oil temperature flowing towards the cargo tank heating ducts is below the cooling water temperature of cooling water emerging from the propulsion engine. The heat that is recovered in this low-temperature circulation mode from the engine cooling water will in many practical situations be sufficient to keep the cargo heated to an elevated temperature during the trip, preferably without the need for additional heating of the thermal oil.

It is envisaged that in the low-temperature circulation mode, the heat recovery may be insufficient to provide the desired heating capacity. For such situations the heating system may make use of one or more additional heaters, e.g. a fuel powered burner heater and/or one or more electrical heaters, to provide some additional heating power for said low-temperature circulation.

The inventive tanker cargo heating system does allow for high-temperature circulation at the very elevated temperatures of the thermal oil at which prior art system commonly are operated, that is well above 100 °C, e.g. between 150 °C and 350 °C, e.g. about 200 °C. It will be appreciated that at such thermal oil temperatures no heat can be effectively drawn from the engine cooling water which is commonly at about 80 - 85 °C, or even heat exchange would be in reverse direction so that the thermal oil would effectively heat the cooling water. For this high-temperature circulation it is envisaged that the one or more valves are operated, so that the engine cooling water circuit no longer communicates with the hot thermal oil circuit. In this high-temperature circulation mode of the thermal oil circuit, the heating can be effected by the high-temperature thermal oil heating device which has capacity to heat the thermal oil in said circuit to a temperature above 100°C while the tanks are filled with liquid product. This oil heating device can be a prior art device, e.g. a fuel powered burner heating device, and/or another heating device, for instance including one or more electric thermal oil heaters.

It is envisaged that, for example, a loaded inland waterway tanker, e.g. having a cargo tank capacity between 2000 and 4500 tonnes of liquid product in the totality of its cargo tanks, e.g. for crude oil, sails from the loading port to an unloading port, wherein during a major portion of the trip between the ports the liquid product is heated by means of heat exchange between the cooling water and the thermal oil in a low-temperature circulation mode wherein the thermal oil temperature is below the cooling water temperature of cooling water emerging from the propulsion engine. Preferably then the recovery of heat from the cooling water is the only source of heat for the thermal oil. It can however also be envisaged that one or more additional heat sources are employed for this low-temperature mode, when the recovered heat is insufficient.

In practical embodiments, during the major portion of the trip the liquid cargo is maintained at a temperature between 30 and 65 °C, and the cooling water emerging from the engine has a temperature of between 75 and 90 °C, e.g. of about 83 °C .

In practical embodiments - in a phase of the trip immediately prior to and possibly also during unloading of the liquid product - the thermal heating oil is circulated in a high-temperature circulation mode, wherein the heating oil is brought to a temperature above 100 °C, e.g. 150 °C and 350 °C, e.g. about 200 °C, by means of the high-temperature heating device, in which phase the cooling water is bypassed around the thermal oil circuit heat exchanger via the bypass duct.

In a practical embodiment the thermal oil circuit heat exchanger comprises a main reservoir having an inlet and an outlet for the cooling water, and comprises an inner reservoir arranged within said main reservoir and having an inlet and an outlet for the thermal oil, wherein the inner reservoir is thermally conductive, e.g. made of metal, e.g. of copper.

Preferably an annular space is present between the main reservoir and the inner reservoir, and wherein the cooling water circulates through said annular space about the inner reservoir.

In an embodiment the heating system comprises one or more electric power thermal oil heaters. It is envisaged that on inland waterway tankers sufficient electrical power is generated to provide electricity for such thermal oil heaters. In fact, in an embodiment, it is envisaged that the high-temperature heating device comprises one or more electric powered heaters, possibly in the high-temperature mode the thermal oil in the circuit being solely heated by said one or more electric powered heaters. As electric heaters are easily adjustable as to their heat output, the same one or more electric heaters may also be used as supplementary heat source in the low-temperature circulation mode of the heating system.

In an embodiment, the thermal oil circuit heat exchanger comprises a main reservoir having an inlet and an outlet for the cooling water, and comprises an inner reservoir arranged within said main reservoir and having an inlet and an outlet for the thermal oil, wherein the inner reservoir is thermally conductive, and wherein one or more electric heaters are arranged within the inner reservoir of the thermal oil circuit heat exchanger.

In an embodiment a generator is provided for generating electricity, possibly this generator being coupled to a propulsion engine shaft of the tanker, the generator being connected to one or more electric heaters of the thermal oil circuit.

It is noted that the propulsion engine may be directly driving the propulsion engine shaft of the vessel. In another embodiment the propulsion engine is a fuel powered generator, which generates electricity for an electrical motor that drives the propeller shaft or other propulsion member of the tanker, for example in an embodiment wherein the tanker has an electric motor pod-drive system.

In an embodiment the tanker comprises one or more outboard water pumps that are adapted to enhance flow through the compartment along the first heat exchanger, when said heat exchanger is arranged in such a compartment having one or more openings in the hull through which outboard water flows into and out of the compartment. In a further developed embodiment the water cooling circuit comprises a temperature sensor, said sensor being linked to a pump control that is adapted to automatically control operation of the one or more outboard water pumps in order to maintain the cooling water temperature of the return to the engine below a preset level.

In an embodiment the thermal oil circuit heat exchanger is placed in or directly adjacent an engine room of the tanker housing the propulsion engine. This is practical as the thermal oil circuit heat exchanger may require a significant space due to the relatively low temperatures that are employed.

In an embodiment - as is known in the field - the thermal oil circuit comprises an expansion reservoir, preferably provided with an alarm to signal excessive thermal oil level in said expansion reservoir.

The present invention also relates to a method of transporting liquid product cargo over inland waterways from a loading port to an unloading port, e.g. of transporting crude oil, wherein use is made of a tanker according to the invention.

A second aspect of the invention relates to a inland waterway vessel, e.g. a vessel for transportation of cargo over inland waterways, e.g. a tanker for transportation of liquid product, e.g. of crude oil, said vessel comprising:
- a hull having an outer hull shell;
- a vessel propulsion engine installation, said installation comprising:
   a). a combustible fuel powered propulsion engine;
   b). a closed cooling water circuit filled with cooling water for cooling said engine, said cooling water circuit comprising:
      i. a cooling water circulation pump,
      ii. a first heat exchanger arranged in a below waterline recessed compartment adjacent the outer hull shell, which compartment has one or more openings allowing outboard water to flow into and out of the compartment so as to exchange heat between the cooling water and outboard water,
   c). an exhaust system for exhaust gas from said engine,
characterized in that
the vessel comprises one or more outboard water pumps adapted to enhance flow of outboard water through said compartment along the first heat exchanger, preferably the water cooling circuit comprising a temperature sensor, said sensor being linked to a pump control that is adapted to control operation of the one or more outboard water pumps in order to maintain the cooling water temperature of the return to the engine below a preset level.

It will be appreciated that a tanker according to the second aspect of the invention may be provided with one or more of the features discussed herein with reference to the first aspect of the invention if desired.

The present invention also relates to a liquid product cargo heating system adapted to be installed in an inland waterway tanker as disclosed herein.

The present invention also relates to the installation of a liquid product cargo heating system as disclosed herein in an inland waterway tanker.

The present invention also relates to a thermal oil circuit heat exchange device as disclosed herein, possibly provided with one or more electrical heaters as disclosed herein.

The aspects of the invention will now be explained in more detail with reference to the drawings. In the drawings:
Fig. 1 shows schematically an inland waterway tanker with cargo heating system according to the invention,
Fig. 2 shows in side view, in cross-section, schematically an example of a thermal oil circuit heat exchanger of the tanker according to the invention,
Fig. 3 shows schematically the thermal oil circuit heat exchanger of figure 2 in top view.

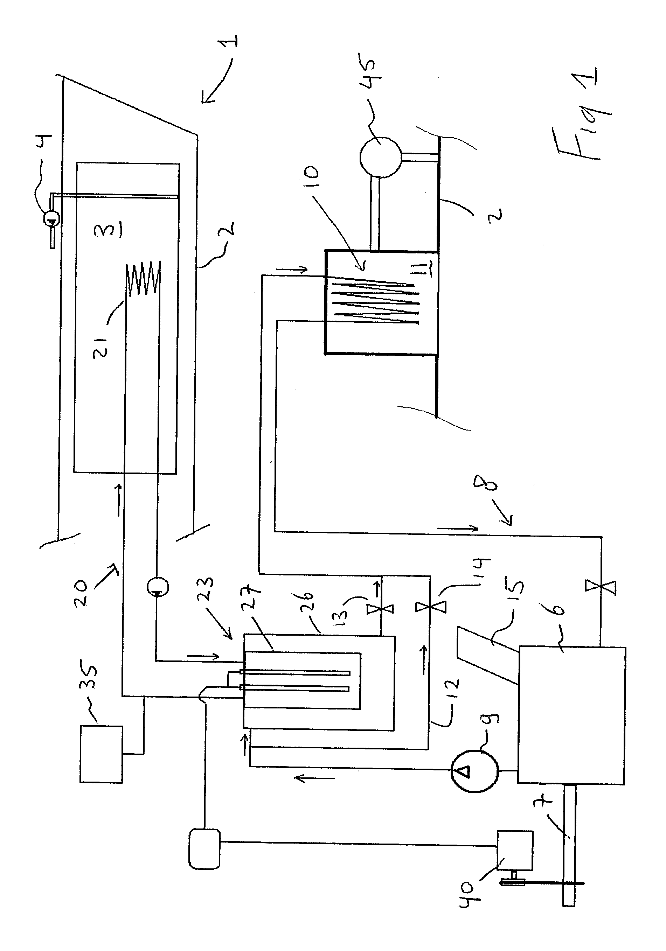

In figure 1 reference numeral 1 denotes an inland waterway tanker for transportation of liquid product over inland waterways, e.g. crude oil. Only a front portion of the hull of the tanker is shown in very schematic manner.

The tanker 1 has a double hull design with an outer hull shell 2 and one or more liquid product cargo tanks 3 that are arranged within the hull, spaced from the outer hull shell 2 to provide the double hull configuration.

The tanker 1 has a cargo loading and unloading arrangement, e.g. including a pump 4. This arrangement allows to pump liquid product into and out of the cargo tank 3.

Figure 1 also schematically shows an example- a tanker propulsion engine installation. This installation comprises a combustible fuel powered propulsion engine 6, e.g. a gasoil powered combustion engine that directly drives a propulsion engine shaft 7 to which a propeller (not shown) is connected.

The engine 6 is cooled by means of a closed cooling water circuit 8 that is filled with cooling water. This cooling water circuit comprising in addition to the associated cooling water ductwork a cooling water circulation pump 9 and a first heat exchanger 10.

The first heat exchanger 10 is - as is known in the Netherlands as beunkoeling - arranged in a below waterline recessed compartment 11 adjacent the outer hull shell 2. This compartment 11 has one or more openings (e.g. in the bottom of the hull and/or in the side of the hull) allowing outboard water to flow into and out of the compartment 11 so as to exchange heat between the cooling water and outboard water.

As is known in the field the heat exchanger 10 may be embodied with inverted U-shaped exchanger tubes arranged in series or with other, e.g. coiled, tubes inside which the cooling water flows and outside of which the outboard water flows.

Figure 1 also schematically depicts an exhaust system 15 for exhaust gas from the engine 6.

The tanker 1 also has a cargo tank heating system for heating the liquid product within the one or more cargo tanks 3 and allowing to keep the product at a suitable elevated temperature during the trip of the tanker, e.g. at a temperature between 30 °C and 65 °C.

The cargo heating system comprises a closed thermal oil circuit 20 that is filled with thermal oil. The thermal oil or similar heatable liquid, allows for heating thereof in the circuit to a temperature above 100 °C, e.g. to above 150 °C, e.g. between 150 °C and 300 °C without significant pressurization of the circuit, e.g. at a pressure in the circuit at or close to atmospheric pressure, e.g. with an expansion vessel in the circuit absorbing expansion of the thermal oil, e.g. at atmospheric pressure or a low pumping pressure.

The thermal oil circuit includes heat exchanger ducts 21 extending along and/or within the one or more cargo tanks 3 to heat the liquid product therein.

The system also includes a high-temperature thermal oil heating device 22 that has a capacity to heat the thermal oil in the circuit to a temperature well above 100 °C, e.g. to above 150 °C, e.g. between 150 °C and 300 °C, e.g. at about 200 °C.

The cargo tank heating system comprises a thermal oil circuit heat exchanger 23 having a cooling water flow path 24 forming part of the cooling water circuit and a thermal oil flow path 25 forming part of the closed thermal oil circuit and being separated from the cooling water flow path.

The thermal oil circuit heat exchanger 23 is adapted to exchange heat between the cooling water and the thermal oil in order to allow for heating of the liquid product in the one or more cargo tanks 3 by heat recovered from the cooling water.

As explained in the introduction the system allows for operation in a low-temperature circulation mode wherein the thermal oil temperature is below the cooling water temperature of cooling water emerging from the propulsion engine 6.

The cooling water flow path 24 of the thermal oil circuit heat exchanger 23 is located between the propulsion engine 6 and the first heat exchanger 10.

The water cooling circuit comprises a bypass duct 9 that is adapted to allow for bypassing the cooling water about the cooling water flow path 24 in the thermal oil circuit heat exchanger 23.

The heating system comprises one or more valves 12, 13 that allow to selectively open or close the cooling water flow path 24 and the bypass duct 9 to selectively pass the cooling water through the thermal oil circuit heat exchanger 23 or to bypass the thermal oil circuit heat exchanger 23.

As explained in the introduction, the system also allows for operation at a high-temperature circulation mode, wherein the thermal oil is heated to very elevated temperatures. This can be done by provision of a fuel fired burner type heating device as known in the art. The figure 1 depicts a variant that can be used as an alternative for the fuel fired burner or in combination therewith, namely the provision of one or more electric powered heaters 30 for the thermal oil in the circuit.

To provide electricity for amongst others the heaters 30 (but also for pumps and other electrical equipment of the tanker) a generator 40 is provided. The figure 1 shows an embodiment, wherein the generator is coupled to the propulsion engine shaft of the tanker.

In order to enhance the controllability of the operating of the first heat exchanger, e.g. when shutting down the recovery of heat from the cooling water by means of the thermal oil circuit heat exchanger or when the tanker stops so that outboard water flow reduces, the tanker comprises one or more outboard water pumps 45 that are adapted to enhance outboard water flow through the compartment 11 along the first heat exchanger 10.

For example, the water cooling circuit comprises a temperature sensor, and this sensor is then linked to a pump control that is adapted to control operation of the one or more outboard water pumps 45 in order to maintain the cooling water temperature of the return to the engine below a preset level.

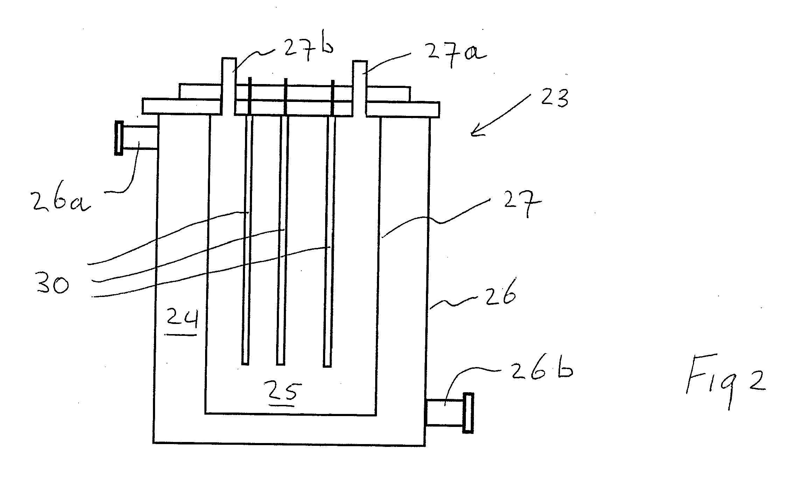

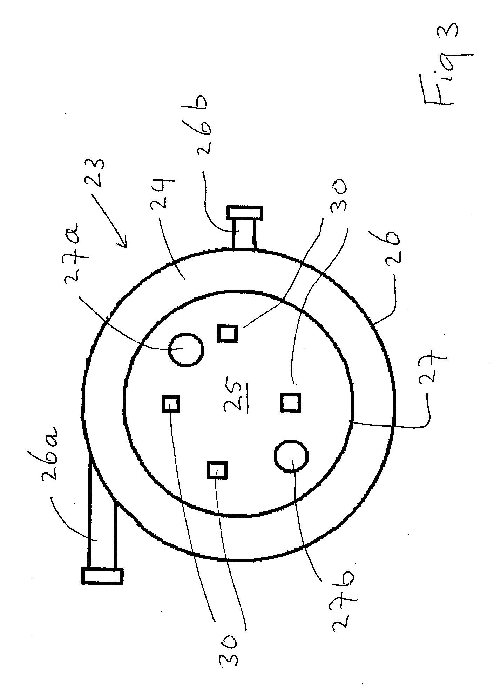

As already schematically indicated in figure 1, a preferred embodiment of the thermal oil circuit heat exchanger for use in the tanker cargo heating system will be discussed with reference to figures 2 and 3.

The thermal oil circuit heat exchanger comprises a main reservoir 26 having an inlet 26a and an outlet 26b for the cooling water. An inner reservoir 27 is arranged within the main reservoir 26 and has an inlet 27a and an outlet 27b for the thermal oil.

The inner reservoir is thermally conductive, e.g. made of metal, e.g. of copper.

An annular space 23 is present between the main reservoir 26 and the inner reservoir 27 and the cooling water circulates through this annular space 28 about the inner reservoir so that the space effectively forms the cooling water flow path.

The inner reservoir 27 can be filled with the thermal oil that circulates through the circuit - as depicted here - or filled with an intermediate heat transfer liquid that transfers heat from the wall of the vessel to the circulating thermal oil.

As is preferred one or more electric heaters 30 are also arranged within this inner reservoir 27, so as to heat the thermal oil flowing through the reservoir 27.

Preferably the thermal oil circuit heat exchanger is placed in or directly adjacent an engine room of the tanker housing the propulsion engine 6.

As is known in the art, the thermal oil circuit comprises an expansion reservoir 35, preferably provided with an alarm to signal excessive thermal oil level in the expansion reservoir.

As explained the depicted tanker can be used to transport a liquid product, e.g. crude oil, over inland waterways from a loading port to an unloading port whilst the product is held at an elevated temperature, e.g. between 30 °C and 65 °C, on the basis, at least primarily, of heat recovered from the cooling water of the propulsion engine 6. The cooling water emerging from the engine 6 commonly has a temperature of between 75 and 90 °C, e.g. about 83 °C.

As explained, if needed, the low-temperature mode of operation of the heating system may be effected with additional heat from another source, e.g. from the depicted electric heaters 30.

When arriving, e.g. just before arrival, at the unloading port, it may be desired to increase the temperature of the cargo in view of pumping the cargo out of the tanks 3. This may require so much heat that the low-temperature mode is not sufficient. Then, as is preferred, the valves are operated to stop the flow of cooling water through the heat exchanger 22.

The electric heaters 30 are now operated to provide so much heat that the thermal oil is heated to well above 100 °C, e.g. between 150 °C and 300 °C, e.g. at about 200 °C. This allows for a fairly rapid increase of the temperature of the cargo so that it can be unloaded. As explained as an alternative to, or as additional measure to, the electric heaters 30 a fuel fired burner type heating device (e.g. as known in the art) may be present.

It is also possible, yet no favored, to include the known exhaust gas heat recovery in the cargo heating system.

## Claims

1. Inland waterway tanker (1) for transportation of liquid product over inland waterways, e.g. crude oil, said tanker comprising
- a hull having an outer hull shell (2);
- one or more liquid product cargo tanks (3) arranged within said hull, spaced from the outer hull shell to provide a double hull configuration,
- a tanker propulsion engine installation, said installation comprising:
a). a combustible fuel powered propulsion engine (6);
b). an exhaust system (14) for exhaust gas from said engine (6),
c). a cooling water circuit for cooling said engine, said cooling water circuit including a cooling water pump (9),
- a cargo tank heating system for heating liquid product within said one or more cargo tanks (3), said heating system comprising:
i. a closed thermal oil circuit (20) filled with thermal oil, said thermal oil circuit comprising heat exchanger ducts (21) extending along and/or within the one or more cargo tanks to heat the liquid product therein,
ii. a high-temperature thermal oil heating device (30) having capacity to heat the thermal oil in said circuit to a temperature above 100 °C,
**characterized in that**
the cargo tank heating system comprises a thermal oil circuit heat exchanger (23) having a cooling water flow path (24) forming part of the cooling water circuit (9) and a thermal oil flow path (25) forming part of the closed thermal oil circuit (20) and being separated from said cooling water flow path, said thermal oil circuit heat exchanger (23) being adapted to exchange heat between the cooling water and the thermal oil in order to allow for heating of the liquid product in the one or more cargo tanks (3) by heat recovered from the cooling water, preferably in a low-temperature circulation mode wherein the thermal oil temperature is below the cooling water temperature of cooling water emerging from the propulsion engine (6),
and **in that** the water cooling circuit comprises a bypass duct (12) adapted to allow for bypassing the cooling water about the cooling water flow path (24) in the thermal oil circuit heat exchanger (23),
and **in that** the heating system comprises one or more valves (13,14) allowing to selectively open or close the cooling water flow path (24) and the bypass duct (12) to selectively pass the cooling water through the thermal oil circuit heat exchanger (23) or to bypass the thermal oil circuit heat exchanger (23).

2. Inland waterway tanker according to claim 1, wherein the cooling circuit is a closed cooling water circuit (8) filled with cooling water for cooling said engine, said closed cooling water circuit comprising:
i. a cooling water circulation pump (9),
ii. a first heat exchanger (10) adapted to exchange heat between the cooling water and outboard water, preferably said first heat exchanger being arranged in a below waterline recessed compartment (11) adjacent the outer hull shell (2), which compartment has one or more openings allowing outboard water to flow into and out off the compartment along the first heat exchanger,
and wherein the cooling water flow path (24) of the thermal oil circuit heat exchanger (23) is located between the propulsion engine (6) and the first heat exchanger (10).

3. Inland waterway tanker according to claim 1 or 2, wherein the thermal oil circuit heat exchanger (23) comprises a main reservoir (26) having an inlet (26a) and an outlet (26b) for the cooling water, and comprises an inner reservoir (27) arranged within said main reservoir and having an inlet (27a) and an outlet (27b) for the thermal oil, wherein the inner reservoir is thermally conductive, e.g. made of metal, e.g. of copper.

4. Inland waterway tanker according to claim 3, wherein an annular space (24) is present between the main reservoir and the inner reservoir, and wherein the cooling water circulates through said annular space about the inner reservoir.

5. Inland waterway tanker according to any of claims 1 - 4, wherein the high-temperature heating device comprises one or more electric powered heaters (30), e.g. in an embodiment according to claim 3 said one or more electric power heaters being arranged within the inner reservoir (27) of the thermal oil circuit heat exchanger.

6. Inland waterway tanker according to claim 5, wherein a generator (40) is provided for generating electricity, preferably said generator being coupled to a propulsion engine shaft (7) of the tanker, the generator being connected to the one or more electric heaters of the thermal oil circuit.

7. Inland waterway tanker according to at least claim 2, wherein the tanker comprises one or more outboard water pumps (45) adapted to enhance flow through said compartment (11) along the first heat exchanger (10).

8. Inland waterway tanker according to claim 7, wherein the water cooling circuit comprises a temperature sensor, said sensor being linked to a pump control that is adapted to control operation of the one or more outboard water pumps in order to maintain the cooling water temperature of the return to the engine below a preset level.

9. Inland waterway tanker according to one or more of the claims 1 - 8, wherein the thermal oil circuit heat exchanger (23) is placed in or directly adjacent an engine room of the tanker housing the propulsion engine (6).

10. Inland waterway tanker according to one or more of the claims 1 - 9, wherein the thermal oil circuit comprises an expansion reservoir (35), preferably provided with an alarm to signal excessive thermal oil level in said expansion reservoir.

11. A method of transporting liquid product cargo over inland waterways from a loading port to an unloading port, e.g. of transporting crude oil, wherein use is made of a tanker (1) according to one or more of the preceding claims, and wherein during a major portion of the trip between the ports the liquid product is heated by means of heat exchange between the cooling water and the thermal oil in a low-temperature circulation mode wherein the thermal oil temperature is below the cooling water temperature of cooling water emerging from the propulsion engine.

12. Method according to claim 11, wherein during said major portion of the trip the liquid cargo is maintained at a temperature between 30 and 65 °C, and wherein the cooling water emerging from the engine has a temperature of between 75 and 90 °C.

13. Method according to claim 11 or 12, wherein - in a phase of the trip immediately prior to and possibly also during unloading of the liquid product - the thermal heating oil is brought to a temperature above 100 °C by means of the high-temperature heating device, in which phase the cooling water is bypassed around the thermal oil circuit heat exchanger via the bypass duct.

## Patentansprüche

1. Binnengewässertanker (1) für einen Transport eines Flüssigprodukts über Binnengewässer, z.B. Rohöl, wobei der Tanker umfasst
- einen Schiffsrumpf mit einer äußeren Ummantelungshülle (2) ;
- einen oder mehrere Flüssigproduktladetanks (3), welche innerhalb des Schiffsrumpfs beabstandet von der äußeren Ummantelungshülle angeordnet sind, um eine Doppelummantelungskonfiguration bereitzustellen,
- eine Tankerantriebsmaschineninstallation, wobei die Installation umfasst:
a) eine mit brennbarem Kraftstoff angetriebene Antriebsmaschine (6);
b) ein Abgassystem (14) zum Abführen von Gas aus der Maschine (6),
c) einen Kühlwasserkreis zum Kühlen der Maschine, wobei der Kühlwasserkreis eine Kühlwasserpumpe (9) aufweist,
- ein Ladetankheizsystem zum Heizen des Flüssigprodukts innerhalb des einen oder der mehreren Ladetanks (3), wobei das Heizsystem umfasst:
i. einen geschlossenen Thermalölkreis (20), welcher mit Thermalöl gefüllt ist, wobei der Thermalölkreis Wärmeaustauschkanäle (21) umfasst, welche sich entlang und/oder innerhalb des einen oder der mehreren Ladetanks erstrecken, um das Flüssigprodukt darin zu erwärmen,
ii. eine Hochtemperaturthermalölheizvorrichtung (30), welche eine Kapazität aufweist, um das Thermalöl in dem Kreis auf eine Temperatur von über 100 °C zu erwärmen,
**dadurch gekennzeichnet, dass**
das Ladetankheizsystem einen Thermalölkreiswärmetauscher (23) aufweist, welcher einen Kühlwasserströmungspfad (24), der einen Teil des Kühlwasserkreises (9) bildet, und einen Thermalölströmungspfad (25), welcher einen Teil des geschlossenen Thermalölkreises (20) bildet und von dem Kühlwasserströmungspfad getrennt ist, aufweist, wobei der Thermalölkreiswärmetauscher (23) ausgestaltet ist, Wärme zwischen dem Kühlwasser und dem Thermalöl auszutauschen, um zu ermöglichen, dass das Flüssigprodukt in dem einen oder den mehreren Ladetanks (3) mit Wärme erhitzt wird, welche aus dem Kühlwasser wiedergewonnen wird, vorzugsweise in einer Niedertemperaturzirkulationsbetriebsart, in welcher die Thermalöltemperatur unterhalb der Kühlwassertemperatur des Kühlwassers ist, welches aus der Antriebsmaschine (6) heraustritt,
und dass der Wasserkühlkreis einen Umleitungskanal (12) umfasst, welcher ausgestaltet ist, zu ermöglichen, dass das Kühlwasser über den Kühlwasserströmungspfad (24) in den Thermalölkreiswärmetauscher (23) umgeleitet wird,
und dass das Heizsystem ein oder mehrere Ventile (13, 14) umfasst, welche ermöglichen, den Kühlwasserströmungspfad (24) und den Umleitungskanal (12) wahlweise zu öffnen oder zu schließen, um wahlweise das Kühlwasser durch den Thermalölkreiswärmetauscher (23) zu leiten oder den Thermalölkreiswärmetauscher (23) zu umgehen.

2. Binnengewässertanker nach Anspruch 1, wobei der Kühlkreise ein geschlossener Kühlwasserkreis (8) ist, welcher mit Kühlwasser zum Kühlen der Maschine gefüllt ist, wobei der geschlossene Kühlwasserkreis umfasst:
i. eine Kühlwasserzirkulationspumpe (9),
ii. einen ersten Wärmetauscher (10), welcher ausgestaltet ist, Wärme zwischen dem Kühlwasser und Außenbordwasser auszutauschen, wobei der erste Wärmetauscher vorzugsweise in einer vertieften Kammer (11) unterhalb der Wasserlinie benachbart zu der äußeren Ummantelungshülle (2) angeordnet ist, wobei die Kammer eine oder mehrere Öffnungen aufweist, welche ermöglichen, dass Außenbordwasser entlang dem ersten Wärmetauscher in die und aus der Kammer fließt,
und wobei der Kühlwasserströmungspfad (24) des Thermalölkreiswärmetauschers (23) zwischen der Antriebsmaschine (6) und dem ersten Wärmetauscher (10) angeordnet ist.

3. Binnengewässertanker nach Anspruch 1 oder 2, wobei der Thermalölkreiswärmetauscher (23) einen Hauptvorratsbehälter (26) umfasst, welcher einen Einlass (26a) und einen Auslass (26b) für das Kühlwasser aufweist, und einen inneren Vorratsbehälter (27) umfasst, welcher innerhalb des Hauptvorratsbehälters angeordnet ist und einen Einlass (27a) und einen Auslass (27b) für das Thermalöl aufweist, wobei der innere Vorratsbehälter thermisch leitend ist, z.B. aus Metall gefertigt ist, z.B. aus Kupfer.

4. Binnengewässertanker nach Anspruch 3, wobei ein ringförmiger Raum (24) zwischen dem Hauptvorratsbehälter und dem inneren Vorratsbehälter vorhanden ist, und wobei das Kühlwasser durch den ringförmigen Raum um den inneren Vorratsbehälter zirkuliert.

5. Binnengewässertanker nach einem der Ansprüche 1-4, wobei die Hochtemperaturheizvorrichtung einen oder mehrere elektrisch angetriebene Heizer (30) umfasst, wobei z.B. in einer Ausführungsform nach Anspruch 3 der eine oder die mehreren elektrisch angetriebenen Heizer innerhalb des inneren Vorratsbehälters (27) des Thermalölkreiswärmetauschers angeordnet sind.

6. Binnengewässertanker nach Anspruch 5, wobei ein Generator (40) zum Erzeugen von Elektrizität vorgesehen ist, wobei der Generator vorzugsweise mit einer Antriebsmaschinenwelle (7) des Tankers gekoppelt ist, wobei der Generator mit dem einen oder den mehreren elektrischen Heizern des Thermalölkreises verbunden ist.

7. Binnengewässertanker nach zumindest Anspruch 2, wobei der Tanker eine oder mehrere Außenbordwasserpumpen (45) umfasst, welche ausgestaltet sind, eine Strömung durch die Kammer (11) entlang dem ersten Wärmetauscher (10) zu verbessern.

8. Binnengewässertanker nach Anspruch 7, wobei der Wasserkühlkreis eine Temperatursensor umfasst, wobei der Sensor mit einer Pumpensteuerung verbunden ist, welche ausgestaltet ist, einen Betrieb von der einen oder den mehreren Außenbordwasserpumpen zu steuern, um die Kühlwassertemperatur des Rücklaufs zu der Maschine unter einem voreingestellten Pegel zu halten.

9. Binnengewässertanker nach einem oder mehreren der Ansprüche 1-8, wobei der Thermalölkreiswärmetauscher (23) in oder direkt neben einem Maschinenraum des Tankers angeordnet ist, in welchem die Antriebsmaschine (6) untergebracht ist.

10. Binnengewässertanker nach einem oder mehreren der Ansprüche 1-9, wobei der Thermalölkreis einen Ausdehnungsbehälter (35) umfasst, welcher vorzugsweise mit einem Alarm versehen ist, um einen übermäßigen Thermalölpegel in dem Ausdehnungsbehälter zu signalisieren.

11. Verfahren zum Transportieren einer Flüssigproduktladung über Binnengewässer von einem Ladehafen zu einem Entladehafen, z.B. zum Transportieren von Rohöl, wobei ein Tanker (1) nach einem oder mehreren der vorhergehenden Ansprüche verwendet wird, und wobei während eines Hauptabschnitts der Fahrt zwischen den Häfen das Flüssigprodukt mittels eines Wärmeaustauschs zwischen dem Kühlwasser und dem Thermalöl in einer Niedertemperaturzirkulationsbetriebsart erwärmt wird, wobei die Thermalöltemperatur unterhalb der Kühlwassertemperatur des Kühlwassers ist, welches aus der Antriebsmaschine austritt.

12. Verfahren nach Anspruch 11, wobei während des Hauptabschnitts der Fahrt die Flüssigladung auf eine Temperatur zwischen 30 und 65 °C gehalten wird, und wobei das Kühlwasser, welches aus der Maschine austritt, eine Temperatur zwischen 75 und 90 °C aufweist.

13. Verfahren nach Anspruch 11 oder 12, wobei - in einer Phase der Fahrt unmittelbar vor und möglicherweise auch während eines Entladens des Flüssigprodukts - das Thermalerwärmungsöl mittels der Hochtemperaturheizvorrichtung auf eine Temperatur über 100 °C gebracht wird, wobei in dieser Phase das Kühlwasser über den Umleitungskanal um den Thermalölkreiswärmetauscher umgeleitet wird.

## Revendications

1. Pétrolier de voie navigable fluviale (1) pour le transport de produit liquide sur les voies navigables fluviales, par exemple du pétrole brut, ledit pétrolier comprenant .
une coque ayant une enveloppe de coque externe (2) ;
une ou plusieurs citernes de marchandise de produit liquide (3) agencées à l'intérieur de ladite coque, espacées de l'enveloppe de coque externe afin de fournir une configuration de double coque,
une installation de moteur à propulsion de pétrolier, ladite installation comprenant :
a) un moteur à propulsion (6) alimenté par combustible ;
b) un système d'échappement (14) pour le gaz d'échappement dudit moteur (6),
c) un circuit d'eau de refroidissement pour refroidir ledit moteur, ledit circuit d'eau de refroidissement comprenant une pompe à eau de refroidissement (9),
un système de chauffage de citerne de marchandise pour chauffer le produit liquide à l'intérieur desdites une ou plusieurs citernes de marchandise (3), ledit système de chauffage comprenant :
i. un circuit d'huile thermique fermé (20) rempli avec de l'huile thermique, ledit circuit d'huile thermique comprenant des conduits (21) d'échangeur de chaleur s'étendant le long et/ou à l'intérieur des une ou plusieurs citernes de marchandise pour chauffer le produit liquide à l'intérieur de ces dernières,
ii. un dispositif de chauffage d'huile thermique à haute température (30) ayant la capacité de chauffer l'huile thermique dans ledit circuit à une température supérieure à 100°C,
**caractérisé en ce que :**
le système de chauffage de citerne de marchandise comprend un échangeur de chaleur de circuit d'huile thermique (23) ayant une trajectoire d'écoulement d'eau de refroidissement (24) faisant partie du circuit d'eau de refroidissement (9) et une trajectoire d'écoulement d'huile thermique (25) faisant partie du circuit d'huile thermique fermé (20) et étant séparée de ladite trajectoire d'écoulement d'eau de refroidissement, ledit échangeur de chaleur de circuit d'huile thermique (23) étant adapté pour échanger la chaleur entre l'eau de refroidissement et l'huile thermique afin de permettre le chauffage du produit liquide dans les une ou plusieurs citernes de marchandise (3) par la chaleur récupérée de l'eau de refroidissement, de préférence dans un mode de circulation à faible température, dans lequel la température de l'huile thermique est inférieure à la température d'eau de refroidissement de l'eau de refroidissement sortant du moteur à propulsion (6),
et **en ce que** le circuit de refroidissement d'eau comprend un circuit de dérivation (12) adapté pour permettre la dérivation de l'eau de refroidissement autour de la trajectoire d'écoulement d'eau de refroidissement (24) dans l'échangeur de chaleur de circuit d'huile thermique (23),
et **en ce que** le système de chauffage comprend une ou plusieurs valves (13, 14) permettant d'ouvrir ou de fermer sélectivement la trajectoire d'écoulement d'eau de refroidissement (24) et le conduit de dérivation (12) pour faire passer sélectivement l'eau de refroidissement par l'échangeur de chaleur de circuit d'huile thermique (23) ou pour dériver l'échangeur de chaleur de circuit d'huile thermique (23).

2. Pétrolier de voie navigable fluviale selon la revendication 1, dans lequel le circuit de refroidissement est un circuit d'eau de refroidissement fermé (8) rempli avec de l'eau de refroidissement pour refroidir ledit moteur, ledit circuit d'eau de refroidissement fermé comprenant :
i. une pompe de circulation d'eau de refroidissement (9),
ii. un premier échangeur de chaleur (10) adapté pour échanger la chaleur entre l'eau de refroidissement et l'eau externe, de préférence ledit premier échangeur de chaleur étant agencé dans un compartiment enfoncé sous la ligne d'eau (11) adjacent à l'enveloppe de coque externe (2), lequel compartiment a une ou plusieurs ouvertures permettant à l'eau externe de s'écouler à l'intérieur et à l'extérieur du compartiment le long du premier échangeur de chaleur,
et dans lequel la trajectoire d'écoulement d'eau de refroidissement (24) de l'échangeur de chaleur de circuit d'huile thermique (23) est positionnée entre le moteur à propulsion (6) et le premier échangeur de chaleur (10).

3. Pétrolier de voie navigable fluviale selon la revendication 1 ou 2, dans lequel l'échangeur de chaleur de circuit d'huile thermique (23) comprend un réservoir principal (26) ayant une entrée (26a) et une sortie (26b) pour l'eau de refroidissement, et comprend un réservoir interne (27) agencé à l'intérieur dudit réservoir principal et ayant une entrée (27a) et une sortie (27b) pour l'huile thermique, dans lequel le réservoir interne est thermiquement conducteur, par exemple réalisé à partir de métal, par exemple du cuivre.

4. Pétrolier de voie navigable fluviale selon la revendication 3, dans lequel un espace annulaire (24) est présent entre le réservoir principal et le réservoir interne et dans lequel l'eau de refroidissement circule à travers ledit espace annulaire autour du réservoir interne.

5. Pétrolier de voie navigable fluviale selon l'une quelconque des revendications 1 à 4, dans lequel le dispositif de chauffage à haute température comprend un ou plusieurs dispositifs de chauffage à commande électrique (30), par exemple dans un mode de réalisation selon la revendication 3, lesdits un ou plusieurs dispositifs de chauffage à commande électrique sont agencés à l'intérieur du réservoir interne (27) de l'échangeur de chaleur de circuit d'huile thermique.

6. Pétrolier de voie navigable fluviale selon la revendication 5, dans lequel on prévoit un générateur (40) pour générer de l'électricité, de préférence ledit générateur étant couplé à un arbre de moteur à propulsion (7) du pétrolier, le générateur étant raccordé aux un ou plusieurs dispositifs de chauffage électrique du circuit d'huile thermique.

7. Pétrolier de voie navigable fluviale selon au moins la revendication 2, dans lequel le pétrolier comprend une ou plusieurs pompes à eau externe (45) adaptées pour améliorer l'écoulement à travers ledit compartiment (11) le long du premier échangeur de chaleur (10).

8. Pétrolier de voie navigable fluviale selon la revendication 7, dans lequel le circuit de refroidissement d'eau comprend un capteur de température, ledit capteur étant relié à une commande de pompe qui est adaptée pour commander le fonctionnement des une ou plusieurs pompes à eau externe afin de maintenir la température d'eau de refroidissement du retour vers le moteur au-dessous d'un niveau prédéterminé.

9. Pétrolier de voie navigable fluviale selon une ou plusieurs des revendications 1 à 8, dans lequel l'échangeur de chaleur de circuit d'huile thermique (23) est placé dans ou de manière directement adjacente à une salle des machines du pétrolier logeant le moteur à propulsion (6).

10. Pétrolier de voie navigable fluviale selon une ou plusieurs des revendications 1 à 9, dans lequel le circuit d'huile thermique comprend un réservoir d'expansion (35), de préférence doté d'une alarme pour signaler le niveau d'huile thermique excessive dans ledit réservoir d'expansion.

11. Procédé pour transporter une cargaison de produit liquide sur des voies navigables fluviales, d'un port de chargement jusqu'à un port de déchargement, par exemple pour transporter du pétrole brut, dans lequel on utilise un pétrolier (1) selon une ou plusieurs des revendications précédentes, et dans lequel pendant une majeure partie du voyage entre les ports, le produit liquide est chauffé au moyen d'échange de chaleur entre l'eau de refroidissement et l'huile thermique dans un mode de circulation à basse température, dans lequel la température d'huile thermique est inférieure à la température d'eau de refroidissement de l'eau de refroidissement sortant du moteur à propulsion.

12. Procédé selon la revendication 11, dans lequel pendant ladite majeure partie du voyage, la cargaison de liquide est maintenue à une température comprise entre 30 et 65°C et dans lequel l'eau de refroidissement sortant du moteur a une température comprise entre 75 et 90°C.

13. Procédé selon la revendication 11 ou 12, dans lequel - dans une phase du voyage immédiatement avant et éventuellement pendant le déchargement du produit liquide - l'huile de chauffage thermique est amenée à une température supérieure à 100°C au moyen du dispositif de chauffage à haute température, dans laquelle phase, l'eau de refroidissement est dérivée autour de l'échangeur de chaleur de circuit d'huile thermique via le conduit de dérivation.
